Europäisches Patentamt

European Patent Office

Office européen des brevets

(11) Veröffentlichungsnummer: **0 554 787 A1**

## (12) EUROPÄISCHE PATENTANMELDUNG

(21) Anmeldenummer: **93101251.2**

(22) Anmeldetag: **28.01.93**

(51) Int. Cl.5: **C08L 23/02**, C08L 25/04,
//(C08L23/02,25:04,53:02),
(C08L25/04,23:02,53:02)

(30) Priorität: **07.02.92 DE 4203543**

(43) Veröffentlichungstag der Anmeldung:
**11.08.93 Patentblatt 93/32**

(84) Benannte Vertragsstaaten:
**BE DE ES FR GB IT NL**

(71) Anmelder: **BASF Aktiengesellschaft
Carl-Bosch-Strasse 38
W-6700 Ludwigshafen(DE)**

(72) Erfinder: **Moedersheim, Norbert
Taunusstrasse 3
W-6710 Frankenthal(DE)**
Erfinder: **Ostermayer, Bertram, Dr.
Zeppelinstrasse 179
W-6900 Heidelberg(DE)**
Erfinder: **Seelert, Stefan, Dr.
Albrecht-Duerer-Ring 23a
W-6710 Frankenthal(DE)**
Erfinder: **Klaerner, Peter, Dr.
Hauptstrasse 62
W-6719 Battenberg(DE)**
Erfinder: **Hoenl, Hans, Dr.
Hauptstrasse 69a
W-6719 Obersuelzen(DE)**
Erfinder: **Jenne, Helmut, Dr.
Grosser Moench 6
W-6905 Schriesheim(DE)**
Erfinder: **Kress, Gerhard, Dr.
Liebermannstrasse 7
W-6700 Ludwigshafen(DE)**

(54) **Thermoplastische Formmassen.**

(57) Thermoplastische Formmasse aus, jeweils bezogen auf die Summe aus A, B und C,
A: 1 bis 89 Gew.-% mindestens eines Styrol enthaltenden Polymerisates A,
B: 1 bis 89 Gew.- eines Polyolefins B und
C: 1 bis 20 Gew.-% einer Mischung mindestens zweier unterschiedlicher, durch anionische Polymerisation hergestellter Blockcopolymerisate C1 bzw. C2 aus Styrol und Butadien oder Isopren, wovon mindestens eines ein Sternblockcopolymerisat mit einem Styrol-Anteil von 50 bis 90 Gew.-% und mindestens ein weiteres ein Sternblockcopolymerisat mit einem Styrolanteil von 10 bis 50 Gew.-% oder ein lineares Blockcopolymerisat von Styrol (S) und Butadien (Bu) mit mindestens drei Blöcken S-Bu-S ist.

EP 0 554 787 A1

Polystyrol und Polyolefine sind untereinander nicht mischbar; wenn solche Mischungen hergestellt werden sollen, werden daher weitere Polymere zugesetzt, die als Mischbarkeitsvermittler dienen sollen, und die Verbesserung der Produkteigenschaften bewirken sollen. So werden hydrierte SBS-Blockcopolymere für diesen Zweck beschrieben (EP 4 685). Auch S(DS)$_n$-Blockcopolymere sollen sich als Mischungsvermittler für Polystyrol-Polyethylen-Mischungen bewähren (EP 60 525); hierbei bedeutet D entweder Isopren oder Butadien, wobei im letzteren Fall das Blockcopolymere in hydrierter Form vorliegen soll. Weiterhin werden als Mischungsvermittler Sternblockcopolymerisate aus Styrol und Butadien vorgeschlagen (EP 310 051).

Die bekannten Mischungen haben immer noch Nachteile in Bezug auf Schlagzähigkeit und Steifigkeit.

Es bestand daher die Aufgabe, z.B. für Lebensmittelverpackungen Formmassen zur Verfügung zu stellen, die eine bessere Spannungsrißbeständigkeit und eine geringere Wasserdampfdurchlässigkeit als schlagfestes Polystyrol besitzen und beim Tiefziehen besser verarbeitbar sein sollten als Polyethylen.

Diese Aufgabe wird gelöst durch eine Formmasse aus schlagzähmodifiziertem Styrol und Polyolefin, die als Mischungsvermittler mindestens zwei spezielle, durch anionische Polymerisation hergestellte Blockcopolymerisate aus Styrol und Butadien oder Isopren enthält.

Unmittelbarer Erfindungsgegenstand ist daher eine thermoplastische Formmasse, enthaltend, jeweils bezogen auf die Summe aus A, B und C,

A: 1 bis 89 Gew.-% mindestens eines Styrol enthaltenden Polymerisates A,

B: 1 bis 89 Gew.- eines Polyolefins B und

C: 1 bis 20 Gew.-% einer Mischung mindestens zweier unterschiedlicher, durch anionische Polymerisation hergestellter Blockcopolymerisate C1 bzw. C2 aus Styrol und Butadien oder Isopren, wovon mindestens eines ein Sternblockcopolymerisat mit einem Styrol-Anteil von 50 bis 90 Gew.-% und mindestens ein weiteres ein Sternblockcopolymerisat mit einem Styrolanteil von 10 bis 50 Gew.-% oder ein lineares Blockcopolymerisat von Styrol (S) und Butadien (Bu) mit mindestens drei Blöcken S-Bu-S ist.

Als Styrolpolymerisat A der erfindungsgemäßen Formmasse kommen ggf. schlagzäh modifizierte Homopolymerisate von Styrol infrage, die durch Polymerisation von Styrol, gegebenenfalls in Gegenwart eines Kautschuks, z.B. eines Butadienpolymerisates oder kautschukartigen Styrol/Butadien-Polymerisats, hergestellt werden. Der Polybutadiengehalt des schlagzähmodifizierten Polystyrols kann 3 bis 20 Gew.-%, vorzugsweise 5 bis 12 Gew.-%, bezogen auf A, betragen. Der mit Styrol gepfropfte Kautschuk (Weichphase) liegt dabei fein dispergiert in einer als Hartmatrix bezeichneten Polystyrolphase vor. Die Herstellung von Polystyrol und von schlagzähmodifiziertem Polystyrol ist bekannt. Polystyrol, ebenso wie schlagfestes Polystyrol, ist im Handel erhältlich. Die Viskositätszahl der Polymerisate A soll im Bereich von 60 bis 120 ml/g (gemessen in 0,5 %iger Lösung in Toluol bei 23°C) liegen.

Als Komponente B dieses Blends kommen Homo- oder Copolymerisate des Ethylens und des Propylens in Frage. In Frage kommt z.B. Polyethylen, hergestellt nach dem Hoch-, Mittel- oder Niederdruckverfahren mit einer Dichte zwischen 0,91 und 0,97 g/cm$^3$, oder Copolymerisate von Ethylen z.B. mit Vinylestern wie Vinylacetat oder Vinylpropionat, mit Acrylestern oder mit Propylen. Der Comonomerengehalt der Ethylencopolymerisate liegt zwischen 1 und 65 Gew.-%, vorzugsweise zwischen 10 und 45 Gew.-%. Der Schmelzflußindex der Ethylenpolymerisate kann in einem weiten Bereich schwanken und beträgt vorzugsweise 0,5 bis 40 g/10 min (MFI 190/2,16). Ein bevorzugtes Polyolefin ist Polyethylen hoher Dichte (Bereich 0,94 bis 0,97 g/cm$^3$) hergestellt nach dem sog. Phillips-Verfahren (Mitteldruckverfahren).Ein anderes bevorzugtes Polyolefin ist lineares Polyethylen niedriger Dichte (Bereich 0,91 bis 0,94 g/cm$^3$) hergestellt nach dem Gasphasenverfahren. Genannt werden soll auch füllstoffhaltiges Polyethylen, bevorzugt wird in diesem Fall Calciumcarbonat als Füllstoff, der in Form von Kreide vorliegt und besonders bevorzugt einen mittleren Teilchendurchmesser von 0,1 bis 20 $\mu$m aufweist. Verwendet werden kann mit Vorteil auch isotaktisches Polypropylen, das z.B. nach dem sog. Gasphasenverfahren der BASF unter Verwendung von sog. Natta-Katalysatoren hergestellt werden kann und einen Schmelzflußindex (MFI 190/5) von 0,1 bis 90 g/10 min aufweist.

Blockcopolymerisat C besteht aus mindestens zwei - an sich bekannten - durch anionische Polymerisation mit lithiumorganischen Verbindungen in organischen Lösungsmitteln hergestellten Blockcopolymerisaten aus Styrol und Butadien oder Isopren. Hiervon ist mindestens eine Komponente eine Sternblockcopolymerisat. Bei der Herstellung der Formmasse können die Blockcopolymerisate gemeinsam oder getrennt zugegeben werden.

Eines der Sternblockcopolymerisat hat in der Regel einen Styrolgehalt von 50 bis 90 Gew.-%, vorzugsweise von 55 bis 80 Gew.-% und inbesondere von 60 bis 80 Gew.-% auf (der Rest ist Butadien und/oder Isopren) und weist eine Viskositätszahl, VZ, von 50 bis 130 (ml/g), vorzugsweise von 65 bis 96 (ml/g) und insbesondere von 70 bis 90 (ml/g) auf (gemessen 0,5 %ig in Toluol bei 23°C). Das andere Blockcopolymerisat ist entweder ein Sternblockcopolymerisat mit 10 bis 50 Gew.-%, vorzugsweise 20 bis 40 Gew.-% Styrol oder ein lineares Blockcopolymerisat von Styrol (S) und Butadien (Bu) mit mindestens 3 Blöcken.

Sternblockcopolymerisate erhält man in bekannter Weise aus "lebenden" linearen Blockcopolymerisaten durch Kopplung mit multifunktionellen Kopplungsmitteln, wobei je nach der Funktionalität des Kopplungsmittels und Ausbeute im Mittel 3 bis 12 Sternäste entstehen. Art und Umfang der Kopplung können mittels GPC-Analyse (Molgewichtsbestimmung), gegebenenfalls nach Abbau ermittelt werden. Der Styrolanteil der beiden Sternblockcopolymerisate soll sich um mindestens 10, vorzugsweise mindestens 20 Gew.-% unterscheiden.

Verzweigte Sternblockcopolymerisate und deren Herstellung sind z.B. in der US-PS 3 281 383 bzw. der GB-PS 985 614 beschrieben. Polymodal aufgebaute verzweigte Blockcopolymerisate sind aus der DE-OS 19 59 922 bekannt. Schließlich sind andersartige, verzweigte Blockcopolymerisate in der DE-OS 25 50 227 beschrieben. Die Kopplungsreaktion zur Herstellung verzweigter Blockcopolymerisate verläuft nicht quantitativ, so daß solche verzweigten Blockcopolymerisate aus Mischungen linearer und verzweigter Blockcopolymerisate bestehen können. Im Sinne der vorliegenden Erfindung sollen jedoch die Umsetzungsprodukte der Kopplung einschließlich der ungekoppelten Anteile als verzweigte Blockcopolymerisate verstanden werden. Bevorzugt werden verzweigte Blockcopolymerisate angewendet, die nach der Lehre der DE-OS 19 59 922 und insbesondere nach der Lehre der DE-OS 25 50 227 (mit verschmierten übergängen zwischen den Blöcken) hergestellt worden sind und die ein mittels GPC bestimmtes Molgewicht von 100.000 bis 300.000 bei einer Sternastzahl von 3 bis 5 aufweisen.

Anstelle eines weiteren Sternblockcopolymerisats C2 kann als eine weitere Komponente C ein lineares Blockcopolymerisat mit mindestens drei Blöcken verwendet werden. Die übergänge zwischen den Blöcken der einzelnen Monomere können scharf oder verschmiert sein. Verschmierte Übergänge erhält man z.B. nach DE 14 20 689 oder DE 15 956 296.

Es ist möglich die linearen Blockcopolymere durch sukzessive Polymerisation der verschiedenen Monomere herzustellen. Es werden dann scharfe Übergänge erhalten. Es ist auch möglich, eine Copolymerisation von Styrol und Butadien bzw. Isopren durchzuführen. Es ergeben sich dann verschmierte Übergänge, d.h. zwischen den Blöcken befindet sich ein Block eines statistischen Styrol-Butadien(Isopren)-Copolymeren.

Lineare Blockcopolymere mit mindestens drei Blöcken werden auch erhalten, wenn "lebende" lineare Blockcopolymerisate mit bifunktionellen Kopplungsmitteln umgesetzt werden. Außerdem können lineare Blockcopolymere mit mindestens drei Blöcken auch durch bei einem Polymerisationsstart mit einem bifunktionellen Initiator hergestellt werden. Das Kettenwachstum erfolgt dann an beiden Enden der Polymerkette.

Die Blockcopolymerisate (nur einige der Blockcopolymeriate) können gegebenenfalls selektiv hydriert oder teilhydriert sein, wobei lediglich die von den Monomerenbausteinen Butadien und/oder Isopren herrührenden Doppelbindungen abgesättigt werden. Derartige Verfahren sind an sich bekannt und können z.B. nach dem in DE-OS 27 48 884 beschriebenen Verfahren durchgeführt werden.

Bei der Polymerisation der Komponenten C ist es auch möglich, anstelle des Styrols ein Gemisch aus Styrol und substituierten Styrolen einzusetzen. Als substituierte Styrol kommen vorzugsweise methylsubstituierte Styrole und insbesondere p-Methylstyrol oder $\alpha$-Methylstyrol in Frage.

Die erfindungsgemäß verwendbaren linearen Blockcopolymerisate werden wie gesagt in bekannter Weise erhalten oder es können handelsverfügbare Produkte verwendet werden. Die linearen Styrol-Butadien-Blockcopolymeren haben z.B. die Struktur S-Bu-S, wobei S und Bin einen Polystyrol- bzw. Polybutadienblock bezeichnet und können auch aus mehr als drei Blöcken, z.B. aus vier oder fünf Blöcken, z.B. der Struktur S-Bu-S-Bu, Bu-S-Bu-S-Bu oder S-Bu-S-Bu-S bestehen. Die vorstehend genannten Druckschriften enthalten auch Angaben zur Herstellung dieser - ungekoppelten - linearen Blockcopolymerisate.

Bei der Herstellung der Formmasse können die Blockcopolymerisate gemeinsam oder getrennt zugegeben werden.

Die erfindungsgemäße Formmasse kann übliche Zusatzstoffe D enthalten, die für die Bestandteile A, B oder C typisch und gebräuchlich sind. Als solche Zusatzstoffe seien beispielsweise genannt: Füllstoffe, Farbstoffe, Pigmente, Antistatika, Antioxidantien, auch Flammschutzmittel und insbesondere sog. Schmiermittel, die für die Weiterverarbeitung der Formmasse, z.B. bei der Herstellung von Formkörpern bzw. Formteilen erforderlich sind.

Die Herstellung der Formmasse erfolgt durch Mischen der Bestandteile. Vorzugsweise geschieht das Mischen der Komponenten durch gemeinsames Extrudieren, Kneten und Verwalzen der Komponenten bei höheren Temperaturen, z.B. in der Schmelze, in einem Ein- oder Zweiwellenextruder, wobei Vormischungen z.B. der Zusatzstoffe D vorgenommen werden können. Der Bestandteil C besteht aus getrennt herzustellenden Anteilen, die jeweils für sich oder gemeinsam den übrigen Bestandteilen beigemischt werden können.

Die erfindungsgemäße Formmasse kann nach den üblichen Verfahren der Thermoplastverarbeitung verarbeitet werden, also z.B. durch Extrudieren, Spritzgießen, Kalandrieren, Hohlkörperblasen, Pressen oder Sintern; bevorzugt werden aus den Formmassen Folien und Extrusion hergestellt.

Die zur Charakterisierung der Erfindung verwendeten Parameter wurden wie folgt bestimmt:

- Streckspannung, SS, Reißdehnung, RD, Elastizitätsmodul, EM, nach DIN 53 455 in (N/mm$^2$)
- Vicat-Erweichungstemperatur nach DIN 53 460 (Vicat A)
- Spannungsrißbeständigkeit nach DIN 53 449 Teil 3: relative Reißdehnung nach 50 Minuten Kontakt mit Speiseöl (RD/50)
- Wasserdampfdurchlässigkeit nach DIN 53 122 (WDD)
- Verarbeitbarkeit beim Tiefziehen. Beim Tiefziehen sind für das Beispiel und die Vergleichsversuche praktisch gleich gute Werte erhalten worden.

Für die Herstellung erfindungsgemäßer Formmassen und von Vergleichsmassen werden die nachstehend beschriebenen Bestandteile verwendet:

Komponente A

A1    ein schlagfestes Polystyrol mit einem Polybutadiengehalt von 7,9 Gew.-% mittlere Teilchengröße der Weichphase 2,7 μm (Mittelwert: 50 Volumenprozent der als Weichphase vorliegenden Kautschukpartikel liegen oberhalb dieses Wertes und 50 Volumenprozent unterhalb dieses Wertes) enthaltend 0,12 Gew.-% eines sterisch gehinderten Phenols als Antioxydans, VZ der Hartmatrix 70 ml/g.

A2    ein schlagfestes Polystyrol mit einem Polybutadiengehalt von 7,9 Gew.-%, mittlere Teilchengröße der Weichphase 2,7 μm (Mittelwert: 50 Volumenprozent der als Weichphase vorliegenden Kautschukpartikel liegen oberhalb dieses Wertes und 50 Volumenprozent unterhalb dieses Wertes) enthaltend 0,12 Gew.-% eines sterisch gehinderten Phenols als Antioxydans und 2,3 Gew.-% Weißöl als Schmiermittel; VZ der Hartmatrix 70 ml/g.

Komponente B

B    LLDPE Lupolen L 3020 GN der BASF AG: (Dichte = 0,920 g/cm$^3$ nach DIN 53 479; MFI (190, 2,16) = 0,9 - 1,2 g/10 min nach DIN 53 735).

Komponente C

C1    Ein polymodal aufgebautes Sternblockcopolymer mit ca. 75 Gew.-% Styrol und 25 Gew.-% Butadien gemäß der Lehre der DE-OS 25 50 227 hergestellt. Molekulargewicht (GPC): 200.000.

C2    Ein polymodal aufgebautes Sternblockcopolymer mit ca. 40 Gew.-% Styrol und 60 Gew.-% Butadien. Molekulargewicht (GPC): 150.000.

C3    Ein SBS-Blockcopolymeres mit ca. 30 Gew.-% Styrol und 70 Gew.-% Butadien. Molekulargewicht (GPC): 165.000.

Ferner wurde eine Mischung aus C1 und C2 verwendet, die z.B. unter den Bezeichnungen Styrolux®684D oder Finaprene® 414 im Handel ist.

Komponente D

Die Bestandteile der Komponente D wurden mit der Komponente A als vormischung eingebracht, wobei als Antioxydans ein sterisch gehindertes Phenol (Irganox 1076) verwendet und im Fall von A2 als Schmiermittel ein medizinisches Weißöl DAB 6 benutzt wurde.

Die Mischungen wurden auf einem Zweiwellenschneckenkneter ZSK 30 der Fa. Werner & Pfleiderer bei 230°C, 210 UPM in einer Menge von 20 kg/h hergestellt und bei 170°C zu Prüfkörpern verpreßt.

Die genannten Teile und Prozente beziehen sich, sofern nicht anders angegeben auf das Gewicht.

4

| Beispiel | * | 1 | 2 | 3 | * | * | 4 | 5 | 6 | * | * | 7 | 8 | 9 | * |
|---|---|---|---|---|---|---|---|---|---|---|---|---|---|---|---|
| Komp. A1 | 55 | 55 | 55 | 55 | 55 | 0 | 0 | 0 | 0 | 0 | 55 | 55 | 55 | 55 | 55 |
| Komp. A2 | 0 | 0 | 0 | 0 | 0 | 55 | 55 | 55 | 55 | 55 | 0 | 0 | 0 | 0 | 0 |
| Komp. B | 41 | 41 | 41 | 41 | 41 | 41 | 41 | 41 | 41 | 41 | 41 | 41 | 41 | 41 | 41 |
| Komp. C1 | 0 | 1 | 2 | 3 | 4 | 0 | 1 | 2 | 3 | 4 | 0 | 1 | 2 | 3 | 4 |
| Komp. C2 | 4 | 3 | 2 | 1 | 0 | 4 | 3 | 2 | 1 | 0 | 0 | 0 | 0 | 0 | 0 |
| Komp. C3 | 0 | 0 | 0 | 0 | 0 | 0 | 0 | 0 | 0 | 0 | 4 | 2 | 2 | 1 | 0 |
| SS ($N/mm^2$) |  | 23 | 22 | 21 | 20 | 22 | 22 | 21 | 20 | 20 | 20 | 20 | 21 | 20 | 20 |
| RD (%) | 10 | 25 | 30 | 22 | 11 | 15 | 29 | 42 | 34 | 18 | 9 | 11 | 15 | 13 | 10 |
| EM ($N/mm^2$) | 1200 | 1100 | 1100 | 1130 | 1190 | 1200 | 1080 | 1000 | 1050 | 1210 | 1280 | 1270 | 1200 | 1210 | 1200 |
| Vicat A (°C) | 104 | 103 | 105 | 105 | 104 | 103 | 104 | 105 | 105 | 104 | 103 | 104 | 104 | 104 | 103 |
| RD/50 (%) | 75 | - | 80 | - | 70 | 88 | - | 90 | - | 81 | - | - | - | - | - |
| WDD ($g/m^2 \cdot d$) | 3,0 | - | 3,0 | - | 3,1 | 3,0 | - | 3,1 | - | 2,9 | - | - | - | - | - |

* = Vergleichsversuch

## Patentansprüche

1. Thermoplastische Formmasse, enthaltend, jeweils bezogen auf die Summe aus A, B und C,

    A:     1 bis 89 Gew.-% mindestens eines Styrol enthaltenden Polymerisates A,

    B:     1 bis 89 Gew.- eines Polyolefins B und

EP 0 554 787 A1

C:     1 bis 20 Gew.-% einer Mischung mindestens zweier unterschiedlicher, durch anionische Polymerisation hergestellter Blockcopolymerisate C1 bzw. C2 aus Styrol und Butadien oder Isopren, wovon mindestens eines ein Sternblockcopolymerisat mit einem Styrol-Anteil von 50 bis 90 Gew.-% und mindestens ein weiteres ein Sternblockcopolymerisat mit einem Styrolanteil von 10 bis 50 Gew.-% oder ein lineares Blockcopolymerisat von Styrol (S) und Butadien (Bu) mit mindestens drei Blöcken S-Bu-S ist.

2.   Formmasse nach Anspruch 1, enthaltend 30 bis 69 Gew.-% A, 30 bis 69 Gew.-% B und 1 bis 20 Gew.-% C.

3.   Formmasse nach Anspruch 1, enthaltend C1 und C2 im Gewichtsverhältnis 1:10 bis 10:1.

4.   Formmasse nach Anspruch 1, dadurch gekennzeichnet, daß sie als mindestens eines der Blockcopolymerisate C ein unter Kopplung erzeugtes Sternblockcopolymerisat aus 55 bis 90 Gew.-% Styrol und 45 bis 10 Gew.-% Butadien enthält, das eine mittlere Sternastzahl von 3 bis 12 aufweist und ein mittels GPC bestimmtes Molekulargewicht von 100.000 bis 300.000 besitzt.

5.   Formmasse nach Anspruch 1 enthaltend, bezogen auf 100 Teile der Mischung aus A, B und C bis 50 Gew.-Teile übliche Zusatzstoffe (Komponente D).

6.   Formmasse nach Anspruch 1, enthaltend als Polymerisat A schlagzäh modifiziertes Polystyrol.

7.   Verwendung der thermoplastischen Formmasse nach Anspruch 1 zur Herstellung von Formteilen.

Europäisches Patentamt

**EUROPÄISCHER RECHERCHENBERICHT**

Nummer der Anmeldung

EP 93 10 1251

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,X | DATABASE WPIL<br>Derwent Publications Ltd., London, GB;<br>AN 93-020505<br>& JP-A-4 248 860 (BASF AG) 4. September 1992<br>* Zusammenfassung *<br>--- | 1-2,5 | C08L23/02<br>C08L25/04<br>//(C08L23/02,<br>25:04, 53:02)<br>(C08L25/04,<br>23:02, 53:02) |
| D,A | EP-A-0 310 051 (BASF AG)<br>* Ansprüche 1-8 *<br>--- | 1-7 | |
| D,A | EP-A-0 060 525 (MONTEFINA S.A.)<br>* Seite 4; Beispiel 1 *<br>* Ansprüche 1-2 *<br>--- | 1-2,6 | |
| D,A | EP-A-0 004 685 (SHELL INTERNATIONALE RESEARCH MAATSCHAPPIJ B.V.)<br>* Ansprüche 1-2,4 *<br><br>----- | 1 | |

| | RECHERCHIERTE SACHGEBIETE (Int. Cl.5) |
|---|---|
| | C08L |

Der vorliegende Recherchenbericht wurde für alle Patentansprüche erstellt

| Recherchenort | Abschlußdatum der Recherche | Prüfer |
|---|---|---|
| DEN HAAG | 26 APRIL 1993 | SIEMENS T. |